# EUROPEAN PATENT APPLICATION

(11) **EP 4 804 506 A1**
(43) Date of publication of application: **09.09.2026**
(21) Application number: 25185787.6
(22) Date of filing: 27.06.2025
(51) Int. Cl.: H04N 1/00, G03G 15/00

(54) **IMAGE FORMING SYSTEM**

(30) Priority: 05.03.2025 JP 2025034304
(71) Applicant: FUJIFILM Business Innovation Corp., Minato-ku Tokyo (JP)
(72) Inventor: MIKI, Masayoshi, Yokohama-shi, Kanagawa (JP)
(74) Representative: Becker Kurig & Partner Patentanwälte mbB

(57) **Abstract**

An image forming system includes a processor configured to restore, in a case where a person is detected within a first distance from an image forming apparatus by a human detection sensor that detects a person, the image forming apparatus in a first power state to a second power state that is a higher power state than the first power state, and restore, in a case where a person is detected by the human detection sensor within a second distance that is a distance from the image forming apparatus shorter than the first distance, restore the image forming apparatus to a third power state that is a higher power state than the second power state.

## Description

### BACKGROUND OF THE INVENTION

### (i) Field of the Invention

The present invention relates to an image forming system.

### (ii) Description of Related Art

JP2019-50627A discloses an image forming apparatus including a human body detection sensor that detects a human body positioned in a detection region within a predetermined range and that has settable sensitivity, and a control unit that cancels a power saving mode in respond to detection performed by the human body detection sensor during a power saving mode and that causes an image forming unit to execute a job.

### SUMMARY OF THE INVENTION

In the related art, an apparatus that is automatically restored to a state where a job can be executed, from a power saving state in a case where a person passes through a periphery of the apparatus is known. However, the person may pass without using the apparatus. In this case, the apparatus is restored to the state where the job can be executed at an unnecessary timing, and power is unnecessarily consumed. Meanwhile, in the configuration of restoring the apparatus to the state where the job can be executed after a person arrives in front of the apparatus, a user of the apparatus has to wait for a long time in front of the apparatus, and convenience of use is reduced.

An object of the present invention is to improve convenience of use and energy saving efficiency for a person expected to use an apparatus.

According to a first aspect of the present disclosure, there is provided an image forming system including a processor configured to restore, in a case where a person is detected within a first distance from an image forming apparatus by a human detection sensor that detects a person, the image forming apparatus in a first power state to a second power state that is a higher power state than the first power state, and restore, in a case where a person is detected by the human detection sensor within a second distance that is a distance from the image forming apparatus shorter than the first distance, the image forming apparatus to a third power state that is a higher power state than the second power state.

According to a second aspect of the present disclosure, in the image forming system according to the first aspect, the processor may be configured to, in a case where a person is detected within the first distance the human detection sensor, for a specific region that is a region connecting a location where the person is detected in a detection region that is a region in which the human detection sensor detects a person, to the image forming apparatus, restore the image forming apparatus to the third power state in a case where the person is detected within a third distance that is a distance from the image forming apparatus longer than the second distance.

According to a third aspect of the present disclosure, in the image forming system according to the second aspect, the third distance may be shorter than the first distance.

According to a fourth aspect of the present disclosure, in the image forming system according to the second or third aspect, the processor may be configured to, for an adjacent region adjacent to the specific region, restore the image forming apparatus to the third power state in a case where the person is detected within a fourth distance that is a distance from the image forming apparatus longer than the second distance.

According to a fifth aspect of the present disclosure, in the image forming system according to the fourth aspect, the fourth distance may be shorter than the third distance.

According to a sixth aspect of the present disclosure, in the image forming system according to any one of the second to fifth aspects, the processor may be configured to stop restoring the image forming apparatus to the third power state in a case where the person is detected within the third distance, based on a predetermined condition.

According to a seventh aspect of the present disclosure, in the image forming system according to any one of the first to sixth aspects, the processor may be configured to, in a case where a person is detected within the first distance by the human detection sensor, set the second distance using a predetermined coefficient with respect to a distance from the image forming apparatus to a location where the person is detected.

According to an eighth aspect of the present disclosure, in the image forming system according to any one of the first to seventh aspects, the processor may be configured to divide a detection region that is a region in which the human detection sensor detects a person, into a plurality of regions in a radial shape centered at the image forming apparatus, and in a case where a person is detected within the first distance by the human detection sensor in any of the divided regions, for a divided region including a location where the person is detected, restore the image forming apparatus to the third power state in a case where the person is detected within a third distance that is a distance from the image forming apparatus longer than the second distance.

According to a ninth aspect of the present disclosure, in the image forming system according to the eighth aspect, the processor may be configured to, for an adjacent divided region adjacent to the divided region including the location where the person is detected, restore the image forming apparatus to the third power state in a case where the person is detected within a fourth distance that is a distance from the image forming apparatus longer than the second distance.

According to a tenth aspect of the present disclosure, in the image forming system according to the ninth aspect, the fourth distance may be shorter than the third distance.

According to an eleventh aspect of the present disclosure, in the image forming system according to the eighth aspect, the processor may be configured to stop restoring the image forming apparatus to the third power state in a case where the person is detected within the third distance in the divided region, based on a predetermined condition.

According to a twelfth aspect of the present disclosure, in the image forming system according to the eleventh aspect, the predetermined condition may indicate that the number of divided regions with which the image forming apparatus is restored to the third power state in a case where the person is detected within the third distance exceeds a predetermined number.

According to a thirteenth aspect of the present disclosure, in the image forming system according to any one of the first to twelfth aspects, the processor may be configured to divide a region in which the human detection sensor detects a person, into a plurality of regions in a radial shape centered at the image forming apparatus, and in a case where a person is detected within the first distance in any of the divided regions, set the second distance in the divided region using a predetermined coefficient with respect to a distance from the image forming apparatus to a location where the person is detected.

According to a fourteenth aspect of the present disclosure, in the image forming system according to the thirteenth aspect, the processor may be configured to cancel the second distance set in the divided region based on a predetermined condition.

According to the first aspect of the present disclosure, energy saving efficiency can be improved while securing convenience of use for a person expected to use the apparatus.

According to the second aspect of the present disclosure, approaching of the person expected to use the apparatus can be detected at an earlier timing than in a configuration in which, in a case where a person is detected in a first region, the person is detected in the second distance in the specific region connecting the location where the person is detected to the image forming apparatus.

According to the third aspect of the present disclosure, approaching of the person expected to use the apparatus can be detected at an earlier timing than in a configuration in which, in a case where a person is detected in a first region, the person is detected in the second distance in the specific region connecting the location where the person is detected to the image forming apparatus.

According to the fourth aspect of the present disclosure, a motion of the person expected to use the apparatus can be handled more flexibly than in a configuration in which, in a case where a person is detected in a first region, the person is not detected in the second distance in the adjacent region adjacent to the specific region.

According to the fifth aspect of the present disclosure, a motion of the person expected to use the apparatus can be handled more flexibly than in a configuration in which, in a case where a person is detected in a first region, the person is not detected in the second distance in the adjacent region adjacent to the specific region.

According to the sixth aspect of the present disclosure, energy saving efficiency can be improved compared to the case of unconditionally continuing a state where the third power state is restored in a case where the person is detected within the third distance.

According to the seventh aspect of the present disclosure, the second distance can be set in accordance with an aspect of use of a user compared to the case of not determining the coefficient for calculating the second distance.

According to the eighth aspect of the present disclosure, since the setting of the second distance and the setting of the third distance can be performed for each divided region, detailed setting corresponding to the aspect of use of the user can be performed.

According to the ninth aspect of the present disclosure, a motion of the person expected to use the apparatus can be handled more flexibly than in a configuration in which, in a case where a person is detected in a first region, the person is not detected in the second distance in the adjacent region adjacent to the divided region that is the specific region.

According to the tenth aspect of the present disclosure, a motion of the person expected to use the apparatus can be handled more flexibly than in a configuration in which, in a case where a person is detected in a first region, the person is not detected in the second distance in the adjacent region adjacent to the divided region that is the specific region.

According to the eleventh aspect of the present disclosure, energy saving efficiency can be improved compared to the case of unconditionally continuing a state where the third power state is restored in a case where the person is detected within the third distance.

According to the twelfth aspect of the present disclosure, energy saving efficiency can be improved compared to the case of unconditionally continuing a state where the third power state is restored in a case where the person is detected within the third distance.

According to the thirteenth aspect of the present disclosure, the second distance can be set in accordance with the aspect of use of the user compared to the case of not determining the coefficient for calculating the second distance.

According to the fourteenth aspect of the present disclosure, energy saving efficiency can be improved compared to the case of unconditionally continuing a state where the third power state is restored in a case where the person is detected within the third distance.

### BRIEF DESCRIPTION OF THE DRAWINGS

Exemplary embodiment(s) of the present invention will be described in detail based on the following figures, wherein:
Fig. 1 is a diagram illustrating an example of an overall configuration of an image forming system in a first exemplary embodiment;
Fig. 2 is a diagram illustrating an example of a hardware configuration of an image forming apparatus of Fig. 1;
Fig. 3 is a diagram illustrating a specific example of a second distance set in advance in a detectable region;
Fig. 4 is a conceptual diagram illustrating a power state of the image forming apparatus of Fig. 2;
Fig. 5 is a diagram illustrating an example of a functional configuration of a CPU of the image forming apparatus of Fig. 2;
Fig. 6 is a flowchart illustrating an example of a flow of processing of detecting a person based on the second distance set in advance, during power state transition processing performed by the image forming apparatus of Fig. 5;
Fig. 7 is a diagram illustrating an example of a functional configuration of a CPU of an image forming apparatus included in an image forming system in a second exemplary embodiment;
Fig. 8 is a diagram for describing processing of setting the second distance, a third distance, or a fourth distance in the detectable region;
Fig. 9 is a diagram for describing the processing of setting the second distance, the third distance, or the fourth distance in the detectable region;
Fig. 10 is a diagram for describing the processing of setting the second distance, the third distance, or the fourth distance in the detectable region;
Fig. 11 is a diagram for describing the processing of setting the second distance, the third distance, or the fourth distance in the detectable region;
Fig. 12 is a diagram for describing the processing of setting the second distance, the third distance, or the fourth distance in the detectable region;
Fig. 13 is a diagram for describing the processing of setting the second distance, the third distance, or the fourth distance in the detectable region;
Fig. 14 is a diagram for describing the processing of setting the second distance, the third distance, or the fourth distance in the detectable region;
Fig. 15 is a diagram for describing the processing of setting the second distance, the third distance, or the fourth distance in the detectable region;
Fig. 16 is a flowchart illustrating an example of a flow of processing of detecting a person by setting the second distance during power state transition processing performed by the image forming apparatus of Fig. 7; and
Fig. 17 is a flowchart illustrating an example of a flow of processing of detecting a person by setting the third distance during the power state transition processing performed by the image forming apparatus of Fig. 7.

### DETAILED DESCRIPTION OF THE INVENTION

Hereinafter, exemplary embodiments of the present invention will be described with reference to the accompanying drawings.

### <First Exemplary Embodiment>

### [Configuration of Image Forming System]

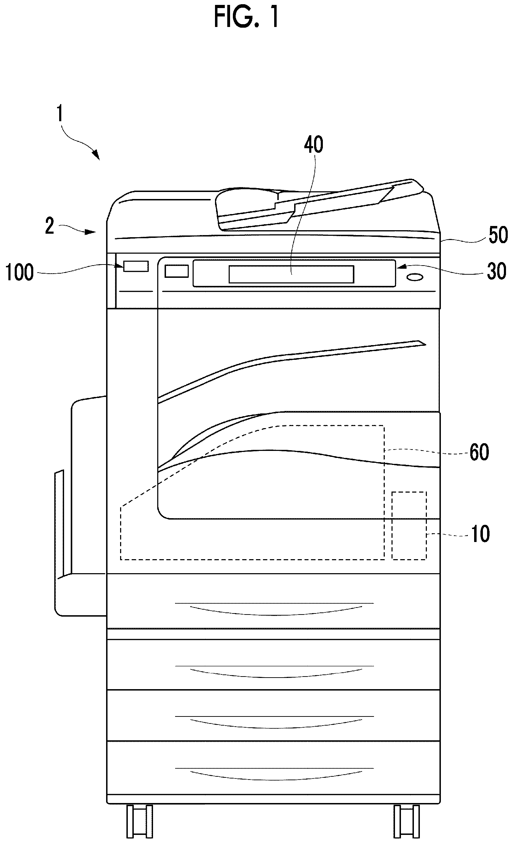

Fig. 1 is a diagram illustrating an example of an overall configuration of an image forming system 1 in a first exemplary embodiment.

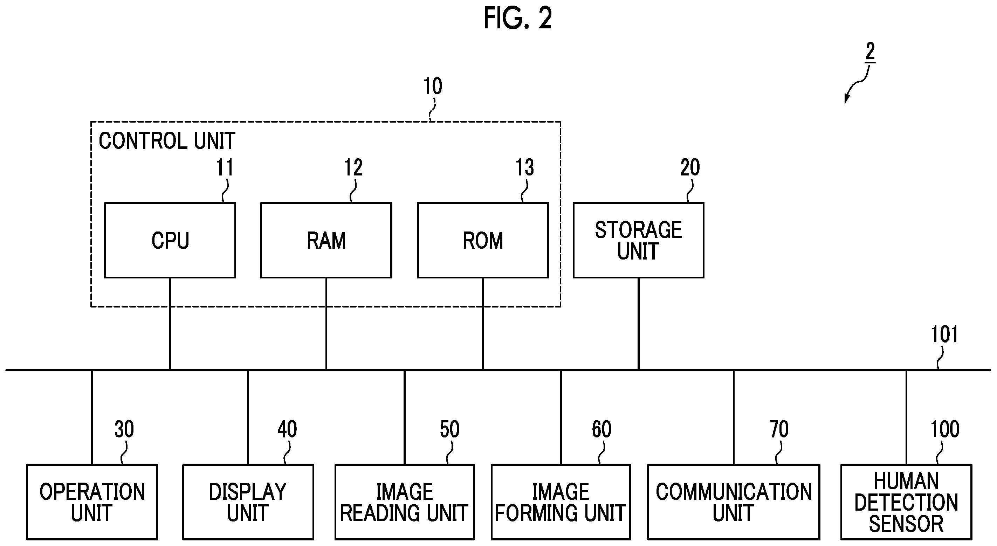

The image forming system 1 includes an image forming apparatus 2 having various functions such as printing, scanning, and copying. For example, the image forming apparatus 2 is assumed to be installed at a place where people pass, such as an office or a shared space. Fig. 1 illustrates a control unit 10, an operation unit 30, a display unit 40, an image reading unit 50, and an image forming unit 60 included in the image forming apparatus 2. These configurations will be described with reference to Fig. 2.

### [Hardware Configuration of Image Forming Apparatus]

Fig. 2 is a diagram illustrating an example of a hardware configuration of the image forming apparatus 2 of Fig. 1.

As illustrated in Fig. 2 and Fig. 1 described above, the image forming apparatus 2 includes the control unit 10, the operation unit 30, the display unit 40, the image reading unit 50, and the image forming unit 60. In addition, as illustrated in Fig. 2, the image forming apparatus 2 includes a storage unit 20, a communication unit 70, and a human detection sensor 100. Each of these functional units is connected to a bus 101 and exchanges data via the bus 101.

The control unit 10 controls each of the above functional units in the image forming apparatus 2. The control unit 10 includes a central processing unit (CPU) 11 that is a calculation section, a random access memory (RAM) 12 that is a storage section, and a read only memory (ROM) 13. The RAM 12 is a main storage device (a main memory) and is used as a work memory during calculation processing performed by the CPU 11. The ROM 13 holds data such as a program and a set value prepared in advance, and the CPU 11 directly reads the program and the data from the ROM 13 and executes processing. The program and the data are also stored in the storage unit 20. The CPU 11 reads the program stored in the storage unit 20 into the RAM 12 and executes the program.

In the present exemplary embodiment, the CPU 11 of the control unit 10 implements various functions by reading and executing the program. The functions implemented in the present exemplary embodiment include an operation control of each functional unit, a control of a power state of the image forming apparatus 2, a control of a region (hereinafter, may be referred to as a "detectable region") in which the human detection sensor 100 can detect the presence of a person, and the like. Details of these functions will be described later.

The storage unit 20 is a functional unit storing the program and the data to be executed by the CPU 11 as described above and also storing various types of data generated by various operations, such as image data read by the image reading unit 50. For example, the storage unit 20 is implemented by a storage device such as a magnetic disk device or a solid state drive (SSD).

The operation unit 30 is a functional unit that receives an operation of a user. For example, the operation unit 30 is configured with a hardware key or a touch sensor that outputs a control signal corresponding to a position of a press or a contact with a finger or the like. The operation unit 30 may be configured as a touch panel in which the touch sensor and a liquid crystal display constituting the display unit 40 are combined.

The display unit 40 is a functional unit that displays an information image presenting various types of information of the user, a preview image of an image as a processing target to be read, output, or the like, an operation image for the user to perform an operation, and the like. For example, the display unit 40 is configured with the liquid crystal display. The operation unit 30 and the display unit 40 can be combined to be used as a user interface section for the user to input and output information on the image forming apparatus 2.

The image reading unit 50 is a functional unit that optically reads an image on a document. A method of reading the image is not particularly limited and may be, for example, a charge coupled devices (CCD) method of reducing reflected light of light emitted to the document from a light source using a lens and receiving light using a CCD. A contact image sensor (CIS) method or the like of receiving reflected light of light emitted to the document in order from a light emitting diode (LED) light source using a CIS may also be used.

The image forming unit 60 is a functional unit that forms an image based on the image data on a medium such as paper using an image forming material. As a method of forming the image on the medium, for example, an electrophotographic method of using toner as the image forming material and forming an image by transferring the toner clinging to a photoconductor to the medium is used.

The communication unit 70 is a functional unit that transmits and receives an instruction and data to and from an external apparatus. An interface corresponding to a method of communication with the external apparatus is used as the communication unit 70. Connection to the external apparatus may be made via a network or may be made through direct connection. A communication line may be a wired line or a wireless line.

The human detection sensor 100 is a sensor that detects a person present around the image forming apparatus 2. For example, a detection sensor including an output unit that outputs a signal, and a detection unit that detects the signal can be applied to the human detection sensor 100. In this case, the human detection sensor 100 obtains different detection results depending on whether or not the signal transmitted from the output unit is detected by the detection unit. Any of various sensors that can detect the presence of a moving object such as a person can be applied to the human detection sensor 100.

For example, an ultrasonic sensor, a sensor using light, a sensor using electric waves, or a sensor that recognizes a temperature of a human body can be applied to the human detection sensor 100. An aspect of the human detection sensor 100 also includes recognizing a person by analyzing an image captured by various imaging sections. Examples of these sensors include an aspect of detecting the presence of a person by causing the signal transmitted from the output unit to reach the person and detecting a reflected signal using the detection unit. In this aspect, the presence of a person is not detected in a case where the reflected signal is not detected.

For example, in the ultrasonic sensor, detection is performed by causing ultrasonic waves transmitted from the output unit to reach a person and receiving reflected ultrasonic waves using the detection unit. In the sensor using light, detection is performed by causing light projected from the output unit to reach a person and receiving reflected light using the detection unit. In the sensor using electric waves, detection is performed by causing electric waves emitted from the output unit to reach a person and receiving reflected electric waves using the detection unit.

The human detection sensor 100 in the present exemplary embodiment has a function of adjusting output intensity of the output unit. For example, the human detection sensor 100 can change the detectable region of the human detection sensor 100 by adjusting the output intensity of the output unit. Specifically, as the output intensity is increased, the signal reaches a farther location, and the detectable region is expanded. Meanwhile, as the output intensity is decreased, a distance that the signal reaches is reduced, and the detectable region is reduced.

### [Detectable Region]

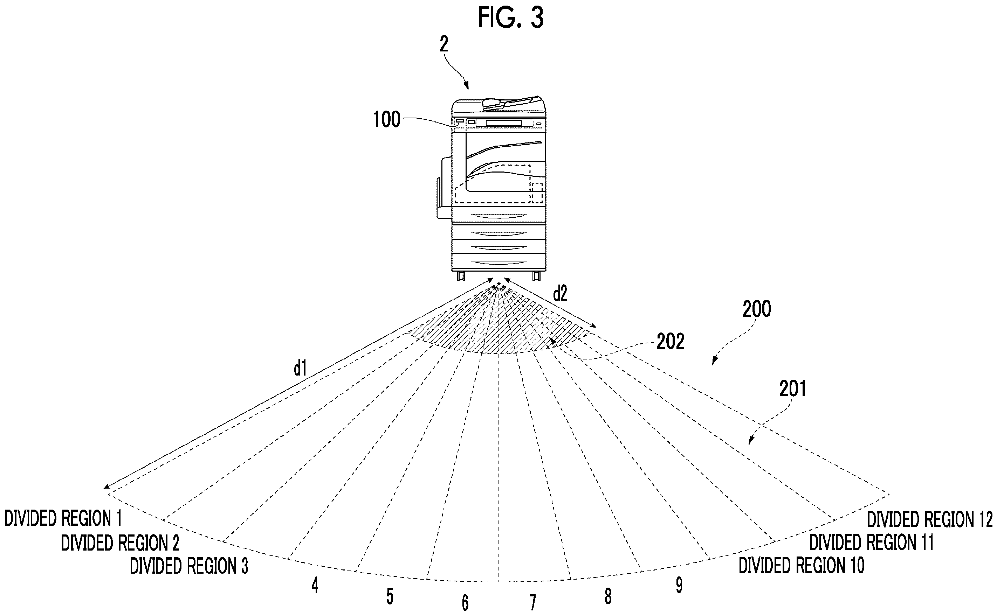

Fig. 3 is a diagram illustrating a specific example of a second distance set in advance in a detectable region 200.

The human detection sensor 100 of the image forming apparatus 2 outputs, for example, a signal such as ultrasonic waves in a specific direction with predetermined output intensity and searches for the presence of a person within a specific range. The human detection sensor 100 outputs the signal in a plurality of directions in order while changing an angle. Accordingly, the human detection sensor 100 searches for the presence of a person in the detectable region 200 expanding in an arc shape centered at the image forming apparatus 2.

For example, the human detection sensor 100 can set a range of approximately 0° to 120° centered at the image forming apparatus 2 as the detectable region 200 and output the signal while changing the angle by approximately 10° at a time. This setting of the angle is merely an example, and the angle can be changed to other set values.

As a method of controlling an output direction of the signal of the human detection sensor 100 via the image forming apparatus 2, for example, a method of changing the output direction of the signal by rotating the output unit of the human detection sensor 100 using a motor may be adopted. As another method, a method of controlling the output direction without rotating the output unit by fixing the output unit of the human detection sensor 100 and reflecting the signal using a mirror member capable of adjusting the angle using a motor may be adopted.

Accordingly, as illustrated in Fig. 3, the detectable region 200 expanding in the arc shape centered at the image forming apparatus 2 is formed. The detectable region 200 illustrated in Fig. 3 is merely an example and is not particularly limited. The detectable region 200 is set with reference to an environment in which the image forming apparatus 2 is installed. The detectable region 200 can be expanded or reduced by controlling the output direction of the signal of the human detection sensor 100.

The detectable region 200 consists of a plurality of regions (hereinafter, referred to as "divided regions") corresponding to each direction in which the human detection sensor 100 outputs the signal. Fig. 3 illustrates divided regions 1 to 12 as an example of the divided regions. The human detection sensor 100 outputs the signal to the divided regions 1 to 12 in this order to detect the presence of a person in each region. The output order of the signal is not limited to the above. For example, the signal may be output to the divided regions 12 to 1 in this order. The number of divided regions is merely an example and is not limited to the 12 divided regions illustrated in Fig. 3.

A range detected by the human detection sensor 100 can be set in advance in the detectable region. For example, in a case where the image forming apparatus 2 is installed at a corner such as a wall of a room or is installed at a place where many people pass, the human detection sensor 100 may unnecessarily respond. In such a case, the human detection sensor 100 can be prevented from performing unnecessary detection by setting the range detected by the human detection sensor 100 in advance in the detectable region 200. For example, a range of the divided regions 7 to 12 illustrated in Fig. 3 may be set to be excluded from a detection target. In this case, the presence of a person can be configured to be detected within a range of the divided regions 1 to 6 by controlling the direction in which the output unit of the human detection sensor 100 outputs the signal. The human detection sensor 100 detects the presence of a person in the detectable region 200 by repeating processing of sequentially outputting the signal for each divided region.

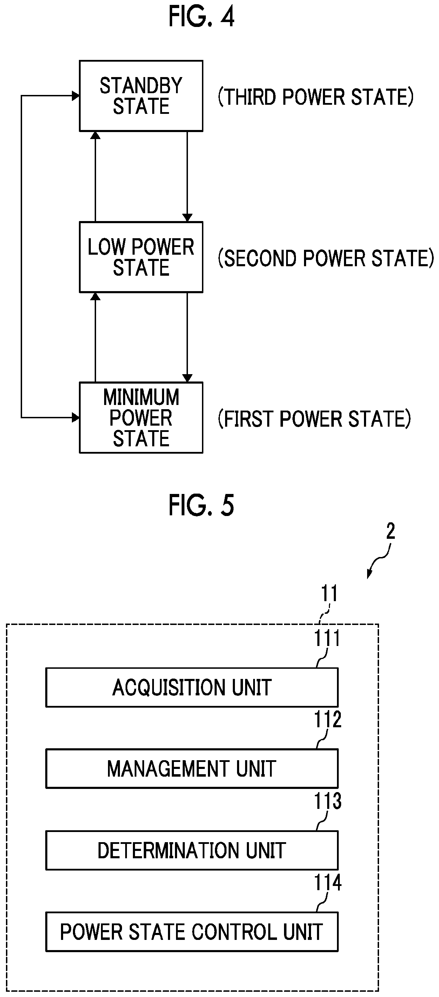

The detectable region 200 consists of a plurality of regions (hereinafter, referred to as "distance regions") corresponding to a distance from the image forming apparatus 2. The distance region is a region formed in accordance with a threshold value of the distance from the image forming apparatus 2. For example, in Fig. 3, a distance d1 that is a first distance in the present invention and a distance d2 that is a second distance in the present invention and is shorter than the distance d1 are set as the threshold value of the distance from the image forming apparatus 2. The distance d1 is a distance that is a threshold value for defining the detectable region 200. The distance d2 is a distance that is a threshold value for defining distance regions 201 and 202 in the detectable region 200. The distances d1 and d2 are used for processing of transitioning the power state of the image forming apparatus 2 (hereinafter, referred to as "power state transition processing"). In the present exemplary embodiment, the distances d1 and d2 are set in advance. Details of the power state transition processing will be described later with reference to the drawings from Fig. 4.

The human detection sensor 100 in the present exemplary embodiment can be provided with a plurality of independent output units. For example, a configuration of providing the output unit corresponding to each region and searching for the presence of a person in each region can be adopted. In this case, in the example of the divided regions 1 to 12 illustrated in Fig. 3, a configuration of providing 12 output units corresponding to each region and outputting the signal in different directions in order to individually search each region may be adopted. In a case where such a configuration is adopted, each region can be searched at the same time. Thus, detection accuracy is improved. A configuration of providing a plurality of output units of a smaller number than the divided regions and outputting the signal by changing angles of the output units may be adopted.

### [Power State of Image Forming Apparatus]

Next, the power state of the image forming apparatus 2 will be described with reference to Figs. 1 to 4.

Fig. 4 is a conceptual diagram illustrating the power state of the image forming apparatus 2 of Fig. 2.

The image forming apparatus 2 can be provided with a plurality of power modes having different power consumption levels. In other words, the image forming apparatus 2 can be set to a plurality of power states having different power consumption amounts. In the present exemplary embodiment, the image forming apparatus 2 may be set to three types of power states including first to third power states as the plurality of power states having different power consumption amounts. Specifically, a "minimum power state" (a first power state) in which power consumption is minimized, a "low power state" (a second power state) having a larger power consumption amount than the minimum power state, and a "standby state" (a third power state) having a larger power consumption amount than the low power state may be set.

The minimum power state is an example of a power state applied to minimize the power consumption of the image forming apparatus 2 in a case where a job is not being executed. The minimum power state is also referred to as a so-called sleep state. In the minimum power state, a control to set a state where only the minimum functions such as the human detection sensor 100 and a part of the control unit 10 start is performed. Specifically, for example, operations of each functional unit such as the display unit 40, the image reading unit 50, and the image forming unit 60 are stopped except for a part of the operation unit 30 that operates in restoring the image forming apparatus 2 to a state where the job can be executed, and each functional unit such as the communication unit 70. Operation states of each functional unit in the minimum power state are set with reference to an operation state necessary for the image forming apparatus 2.

The low power state is an example of a power state applied in the case of setting a state where the image forming apparatus 2 can be restored more quickly than the image forming apparatus 2 in the minimum power state, and the power consumption amount is reduced below the power consumption amount in the standby state. The low power state is a power state positioned between the minimum power state and the standby state. The operation states of each functional unit in the low power state are set with reference to the operation state necessary for the image forming apparatus 2.

The standby state is an example of a power state where each functional unit starts and the job can be executed. In the standby state, for example, the job such as printing, scanning, or copying can be executed. However, in the standby state, the power consumption amount increases because each functional unit such as the display unit 40 functioning in displaying an operation screen and the image forming unit 60 functioning in forming the image needs to be supplied with power.

The image forming apparatus 2 in the present exemplary embodiment can perform the power state transition processing for the three types of power states. Control of the power state transition processing is implemented by causing the CPU 11 (see Fig. 2) of the control unit 10 to read and execute the program. Specifically, as the power state transition processing, the image forming apparatus 2 can be restored from the standby state to the minimum power state through the low power state and from the minimum power state to the standby state through the low power state. Alternatively, as the power state transition processing, the image forming apparatus 2 can be restored from the standby state directly to the minimum power state without passing through the low power state and from the minimum power state directly to the standby state without passing through the low power state.

### [Functional Configuration of Image Forming Apparatus]

Next, a functional configuration of the image forming apparatus 2 will be described with reference to Figs. 1 to 5.

Fig. 5 is a diagram illustrating an example of a functional configuration of the CPU 11 of the image forming apparatus 2 of Fig. 2.

In the CPU 11 of the image forming apparatus 2, an acquisition unit 111, a management unit 112, a determination unit 113, and a power state control unit 114 function to implement the power state transition processing of Fig. 4.

The acquisition unit 111 acquires the detection result of the human detection sensor 100 of Fig. 2. For example, in a case where the human detection sensor 100 detects a person, the acquisition unit 111 acquires, as the detection result, a distance (hereinafter, referred to as a "detection distance") from the image forming apparatus 2 to a location where the person is detected.

The management unit 112 stores and manages the acquired detection result in the storage unit 20 of Fig. 2. For example, the management unit 112 stores and manages the detection result acquired by the acquisition unit 111 in the storage unit 20.

The determination unit 113 performs various types of determination based on the detection result of the human detection sensor 100. For example, the determination unit 113 determines whether or not a person enters the detectable region 200 (see Fig. 3) based on the detection distance as the detection result. The determination unit 113 also determines whether or not a person exits from the detectable region 200 based on the detection distance as the detection result.

The determination as to whether or not a person enters the detectable region 200 via the determination unit 113 includes determination as to whether or not the person enters the distance region 201 (see Fig. 3) and determination as to whether or not the person enters the distance region 202 (see Fig. 3). The determination as to whether or not a person exits from the detectable region 200 via the determination unit 113 includes determination as to whether or not the person exits from the distance region 201 to the outside of the detectable region 200 and determination as to whether or not the person exits from the distance region 202 to the outside of the detectable region 200.

The determination as to whether or not the person enters the distance region 201 includes determination as to whether or not the person enters the distance region 201 from the outside of the detectable region 200 and determination as to whether or not the person moves from the distance region 202 to the distance region 201. The determination as to whether or not the person enters the distance region 202 includes determination as to whether or not the person enters the distance region 202 from the outside of the detectable region 200 and determination as to whether or not the person moves from the distance region 201 to the distance region 202.

The determination as to whether or not the person exits from the distance region 201 includes determination as to whether or not the person exits from the distance region 201 to the outside of the detectable region 200 and determination as to whether or not the person moves from the distance region 201 to the distance region 202. The determination as to whether or not the person exits from the distance region 202 includes determination as to whether or not the person exits from the distance region 202 to the outside of the detectable region 200 and determination as to whether or not the person moves from the distance region 202 to the distance region 201.

The power state control unit 114 controls the power state of the image forming apparatus 2 based on a determination result of the determination unit 113. Specifically, in a case where the determination unit 113 determines that a person enters the distance region 201 from the outside of the detectable region 200, the power state control unit 114 performs a control of transitioning the power state from the minimum power state to the low power state. In a case where the determination unit 113 determines that the person moves from the distance region 201 to the distance region 202, the power state control unit 114 performs a control of restoring the image forming apparatus 2 by transitioning the power state from the low power state to the standby state and returning the power state to the standby state.

In a case where the determination unit 113 determines that the person moves from the distance region 202 to the distance region 201, the power state control unit 114 performs a control of transitioning the power state from the standby state to the low power state. In a case where the determination unit 113 determines that the person exits from the distance region 201 to the outside of the detectable region 200, the power state control unit 114 performs a control of transitioning the power state from the low power state to the minimum power state.

In a case where the determination unit 113 determines that a person enters the distance region 202 from the outside of the detectable region 200, the power state control unit 114 performs a control of restoring the image forming apparatus 2 by transitioning the power state from the minimum power state to the standby state without passing through the low power state. In a case where the determination unit 113 determines that the person exits from the distance region 202 to the outside of the detectable region 200, the power state control unit 114 performs a control of transitioning the power state from the standby state to the minimum power state without passing through the low power state.

### [Flow of Power State Transition Processing]

Next, a flow of the power state transition processing in the first exemplary embodiment will be described with reference to Figs. 1 to 6.

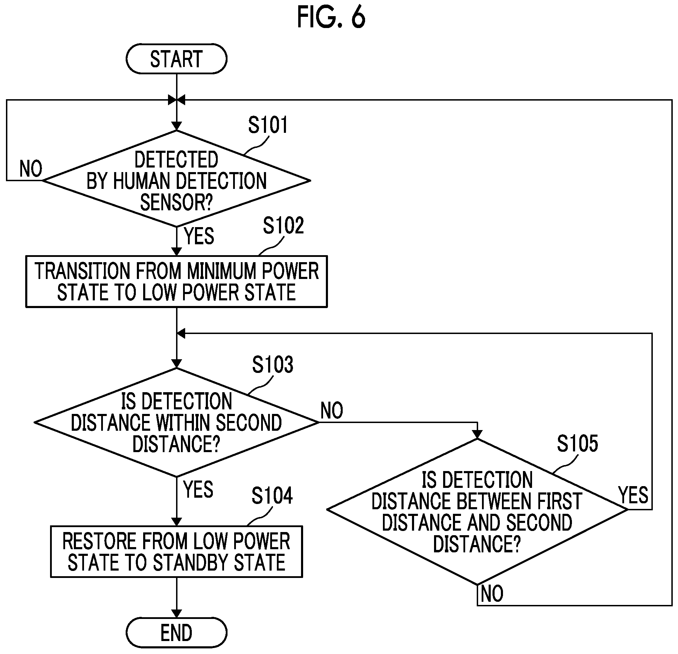

Fig. 6 is a flowchart illustrating an example of a flow of processing of detecting a person based on the second distance set in advance, during the power state transition processing performed by the image forming apparatus 2 of Fig. 5.

The image forming apparatus 2 maintains the minimum power state in a state where no one enters the detectable region 200 (see Fig. 3). In a case where the human detection sensor 100 detects a person entering the distance region 201 from the outside of the detectable region 200 (YES in step S101), the image forming apparatus 2 transitions from the minimum power state to the low power state (step S102). Meanwhile, in a case where the human detection sensor 100 does not detect anyone (NO in step S101), the image forming apparatus 2 repeats the determination processing of step S101.

In a case where the detection distance of the person detected in step S101 is within the second distance (YES in step S103), the image forming apparatus 2 determines that the person enters the distance region 202, and is restored by transitioning from the low power state to the standby state (step S104). Accordingly, the processing is finished (END). Meanwhile, in a case where the detection distance exceeds the second distance (NO in step S103), the image forming apparatus 2 proceeds to the determination processing of step S105.

In a case where the detection distance of the person detected in step S101 is between the first distance and the second distance (YES in step S105), the image forming apparatus 2 determines that the person is staying in the distance region 201. In the example of Fig. 3, in a case where the detection distance is between the distance d1 and the distance d2, a determination that the person is staying in the distance region 201 is made. In this case, the image forming apparatus 2 returns to the determination processing of step S103. Meanwhile, in a case where the detection distance of the person detected by the human detection sensor 100 in step S101 is not between the first distance and the second distance (NO in step S105), the image forming apparatus 2 determines that the person exits from the detectable region 200. In the example of Fig. 3, in a case where the detection distance is not between the distance d1 and the distance d2, the image forming apparatus 2 determines that the person exits from the detectable region 200. In this case, the image forming apparatus 2 returns to the determination processing of step S101.

### <Second Exemplary Embodiment>

### [Functional Configuration of Image Forming Apparatus]

Next, a functional configuration of an image forming apparatus 3 included in an image forming system according to a second exemplary embodiment will be described with reference to Figs. 1 to 15.

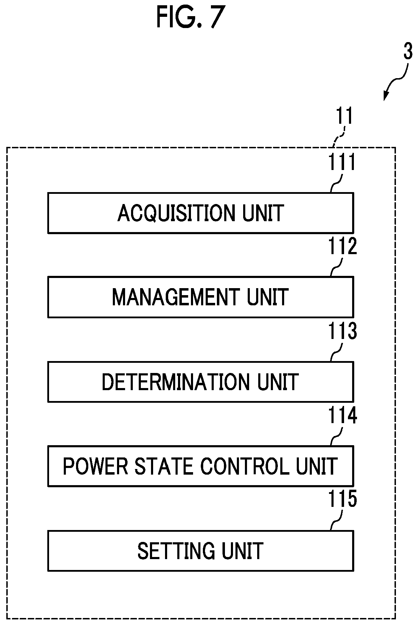

Fig. 7 is a diagram illustrating an example of a functional configuration of the CPU 11 of the image forming apparatus 3 included in the image forming system in the second exemplary embodiment.

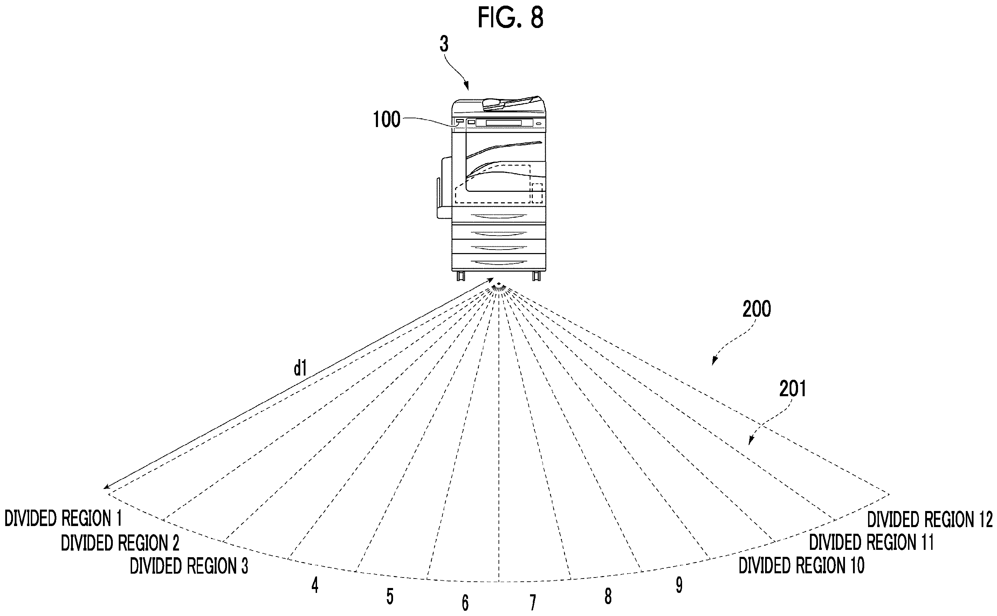

Figs. 8 to 15 are diagrams for describing processing of setting the second distance, a third distance, or a fourth distance in the detectable region 200.

A configuration of the image forming system in the second exemplary embodiment is basically the same as the configuration illustrated in Fig. 1, and a hardware configuration of the image forming apparatus 3 of the image forming system in the second exemplary embodiment is also basically the same as the configuration illustrated in Fig. 2. However, while the second distance in the first exemplary embodiment described above is set in advance, the second distance in the second exemplary embodiment is set in accordance with a situation. The second distance is set under control of a setting unit 115 illustrated in Fig. 7.

### (Setting of Second Distance)

In a case where a person is detected within the first distance in any of the divided regions, the setting unit 115 illustrated in Fig. 7 can set the second distance using a predetermined coefficient with respect to the detection distance of the detected person. The setting unit 115 sets the second distance for each divided region using the predetermined coefficient. For example, in a case where the predetermined coefficient is 0.5, a distance calculated by multiplying the detection distance by 0.5 (that is, a distance that is half of the detection distance) is set as the second distance.

Figs. 8 to 11 illustrate specific examples of processing of setting the second distance in the detectable region 200. In the examples of Figs. 8 to 11, the distance d1, which is the first distance, is 200 cm and the predetermined coefficient is 0.5. In this case, the detectable region 200 is defined by the distance d1. The setting unit 115 does not set the second distance unless a person enters the detectable region 200. Thus, as illustrated in Fig. 8, in a state where a person does not enter the detectable region 200, only the distance region 201 is formed in the detectable region 200. In the state illustrated in Fig. 8, the power state control unit 114 performs a control of setting the image forming apparatus 3 to the minimum power state.

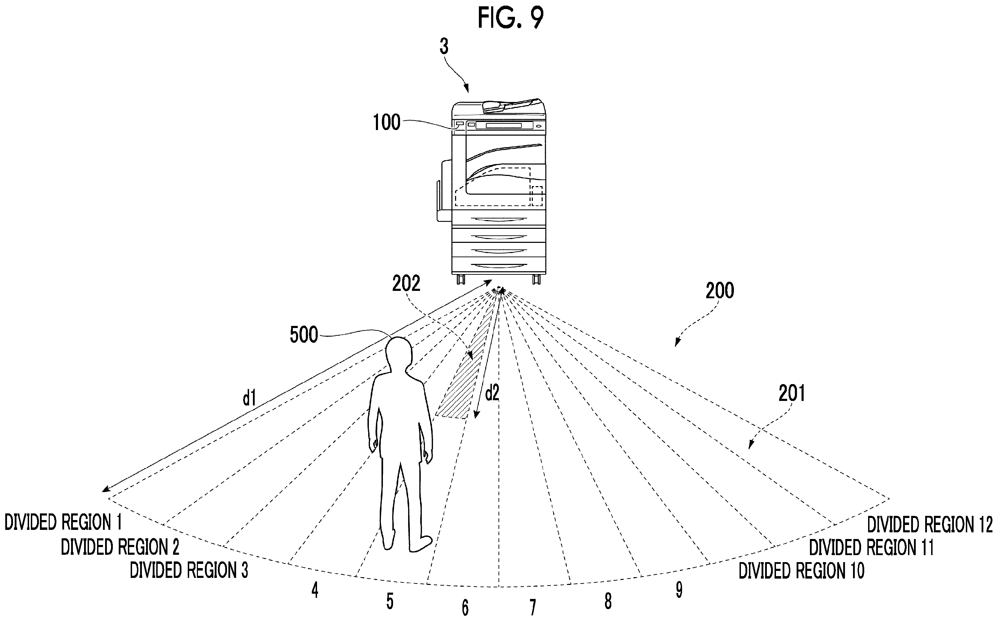

Here, as illustrated in Fig. 9, a person 500 enters the divided region 5 of the detectable region 200. Then, the power state control unit 114 controls the power state of the image forming apparatus 3 to transition from the minimum power state to the low power state. The setting unit 115 sets the distance d2, which is the second distance, in the divided region 5 based on 0.5, which is the predetermined coefficient. For example, in a case where the detection distance of the person 500 who enters the divided region 5 is 180 cm, 90 cm calculated by multiplying 180 cm by 0.5, which is the predetermined coefficient, is set as the distance d2. Accordingly, the distance region 202 is formed in the divided region 5. In the state illustrated in Fig. 9, the power state control unit 114 controls the image forming apparatus 3 to be in the low power state as long as the person 500 is staying in the distance region 201. However, in a case where the person 500 moves from the distance region 201 to the distance region 202, the power state control unit 114 performs a control of restoring the image forming apparatus 3 by transitioning the power state of the image forming apparatus 3 from the low power state to the standby state.

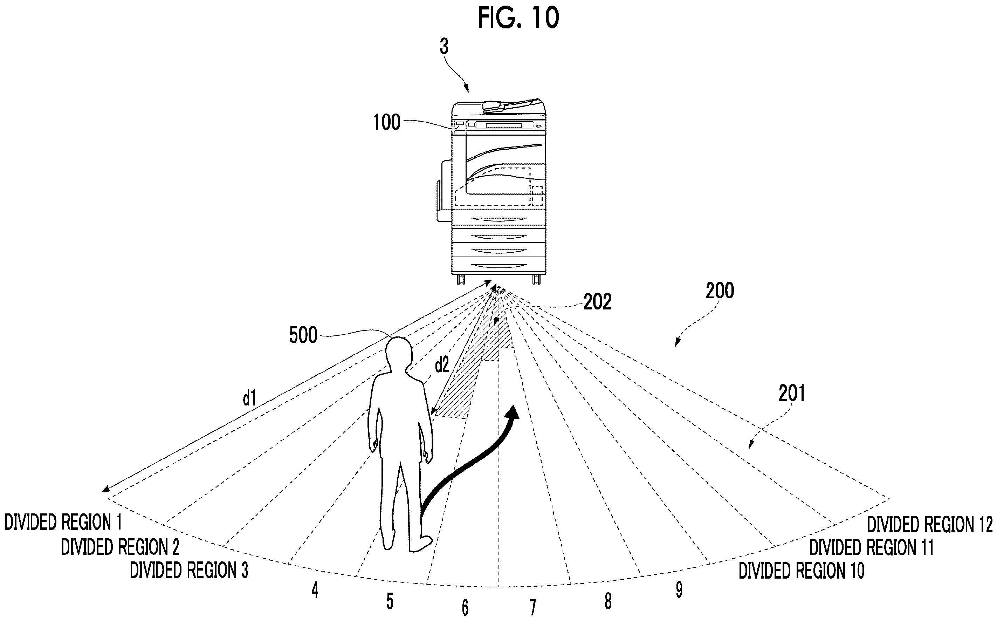

Then, as illustrated in Fig. 10, the person 500 moves in the direction of the arrow. Accordingly, the person 500 moves from the divided region 5 to the divided regions 6 and 7 in this order. In this case, the setting unit 115 sets the distance d2 based on 0.5, which is the predetermined coefficient, in the order of the divided regions 6 and 7 in accordance with the movement of the person 500. Accordingly, the distance region 202 is formed in each of the divided regions 5 to 7. In the state illustrated in Fig. 10, even in a case where the person 500 moves through the divided regions, the power state control unit 114 controls the image forming apparatus 3 to be in the low power state as long as the person 500 is staying in the distance region 201. However, in a case where the person 500 moves from the distance region 201 to the distance region 202, the power state control unit 114 performs a control of restoring the image forming apparatus 3 by transitioning the power state of the image forming apparatus 3 from the low power state to the standby state.

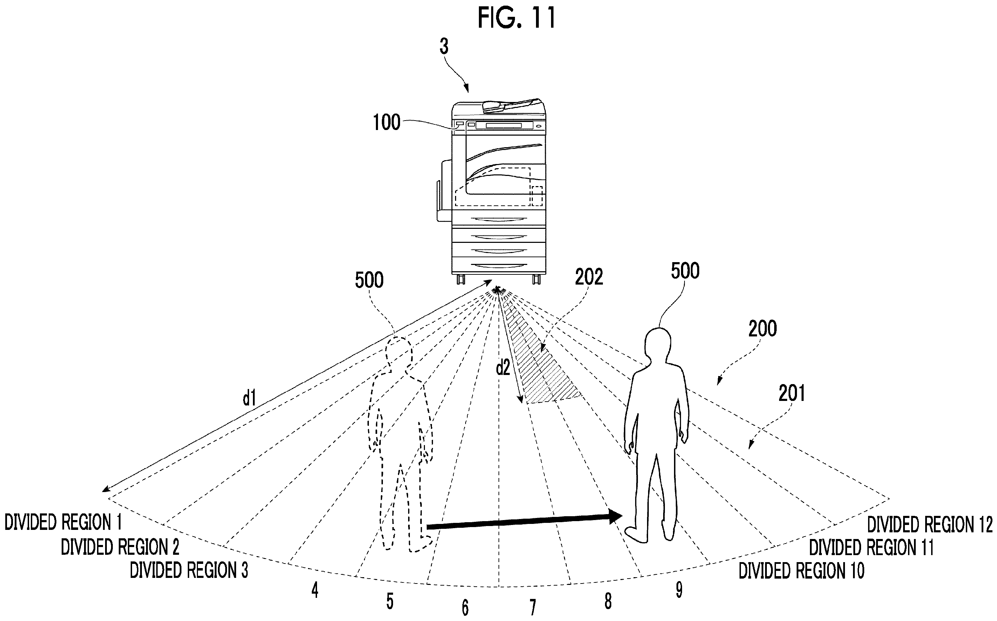

As another example, the person 500 moves from the divided region 5 to the divided regions 6 to 9 in this order, as indicated by the arrow in Fig. 11. In this case, the setting unit 115 sets the distance d2 based on 0.5, which is the predetermined coefficient, in the order of the divided regions 6 to 9 in accordance with the movement of the person 500. However, in a case where a predetermined condition is satisfied, the setting of the distance d2 may be canceled.

That is, in a case where the predetermined condition is satisfied, the setting unit 115 can cancel the setting of the second distance. Hereinafter, a condition for canceling the distance set by the setting unit 115 will be referred to as a "cancelation condition". For example, the cancelation condition may indicate that a determination that the person 500 exits to the outside of the detectable region 200 is made, or a predetermined time elapses from the setting of the second distance. Alternatively, the cancelation condition may indicate that the number of divided regions in which the second distance is set exceeds a predetermined number. In this case, the "predetermined number" is a number with which the second distance can be set at the same time.

In the example of Fig. 11, the cancelation condition indicating that the number of divided regions in which the second distance is set exceeds "two" is determined in advance. Thus, Fig. 11 illustrates a state where the distance d2 set in each of the divided regions 5 to 7 is canceled among the distances d2 set in each of the divided regions 5 to 9.

### (Setting of Third Distance)

In a case where a person is detected within the first distance, the setting unit 115 illustrated in Fig. 7 can set the third distance in which a region connecting the location where the person is detected to the image forming apparatus 3 is set as a specific region. The third distance is set as a distance that is longer than the second distance and shorter than the first distance. The third distance is used in the power state transition processing, like the first distance and the second distance.

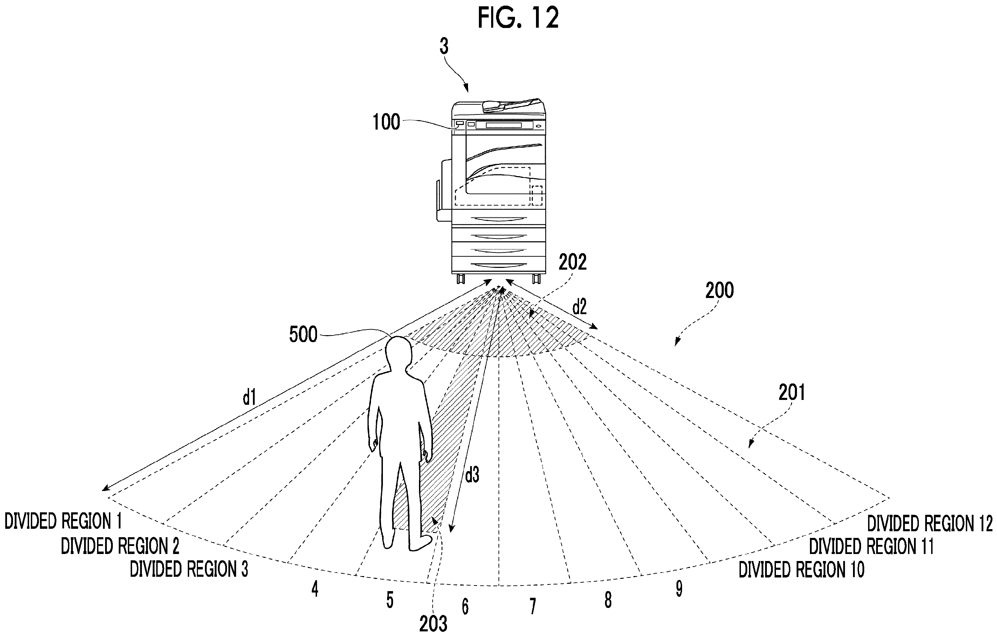

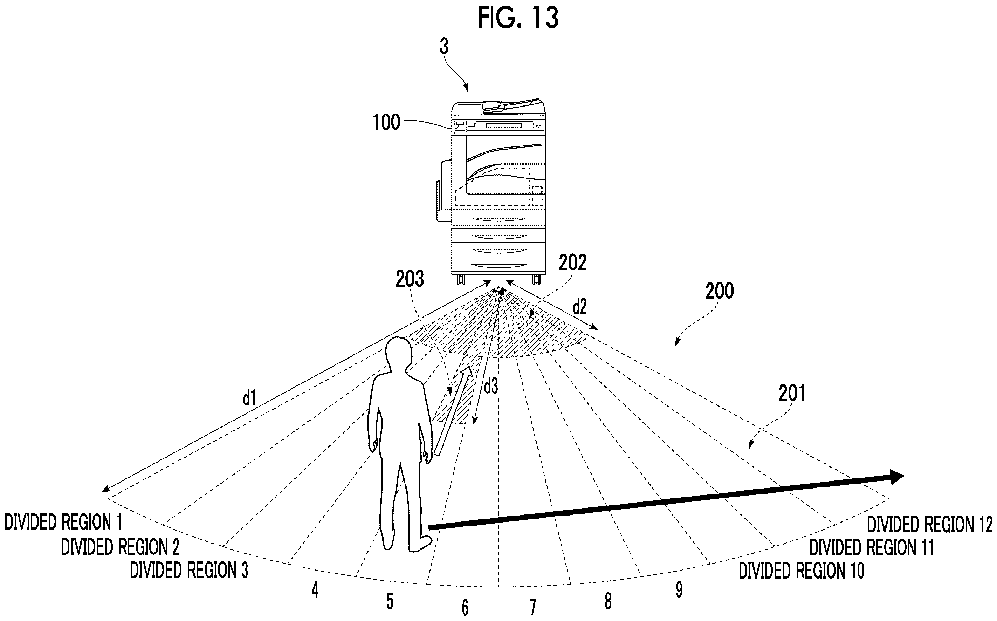

Figs. 12 and 13 illustrate specific examples in a case where the third distance is set in the detectable region 200. In the examples of Figs. 12 and 13, the second distance is the predetermined distance d2. As illustrated in Fig. 12, in a case where the person 500 enters the distance region 201 of the divided region 5 of the detectable region 200, the power state control unit 114 controls the power state of the image forming apparatus 3 to transition from the minimum power state to the low power state. The setting unit 115 sets a distance d3 that is the third distance, by setting the divided region 5 entered by the person 500 as the specific region.

The distance d3 illustrated in Figs. 12 and 13 is a distance as a threshold value for defining a distance region 203 in the divided region 5 as the specific region. Thus, in a case where the distance d3 is set in the divided region 5, the distance region 203 is formed in the divided region 5. Since the third distance (the distance d3) set in the specific region can be set within a range of the specific region, a length of the third distance is not necessarily uniform. For example, the distance d3 may be set to be slightly shorter than the distance d1, as illustrated in Fig. 12, or the distance d3 may be set to have a length of approximately half of the distance d1, as illustrated in Fig. 13.

In a case where the distance region 203 is formed in the specific region, the determination unit 113 determines whether or not the person 500 enters the distance region 203 and determines whether or not the person 500 exits from the distance region 203, based on the detection distance of the human detection sensor 100 as the detection result. The determination as to whether or not the person 500 enters the distance region 203 includes determination as to whether or not the person 500 moves from the distance region 201 to the distance region 203 and determination as to whether or not the person 500 moves from the distance region 202 to the distance region 203. The determination as to whether or not the person 500 exits from the distance region 203 includes determination as to whether or not the person 500 moves from the distance region 203 to the distance region 201 and determination as to whether or not the person 500 moves from the distance region 203 to the distance region 202.

In a case where the distance region 203 is formed in the specific region, the power state control unit 114 performs controls the power state as follows. That is, in a case where the determination unit 113 determines that the person 500 moves from the distance region 201 to the distance region 203, the power state control unit 114 performs a control of restoring the image forming apparatus 3 by transitioning the power state from the low power state to the standby state. In a case where the determination unit 113 determines that the person 500 moves from the distance region 203 to the distance region 201, the power state control unit 114 performs a control of transitioning the power state from the standby state to the low power state.

In a case where the determination unit 113 determines that the person 500 moves from the distance region 201 to the outside of the detectable region 200, the power state control unit 114 performs a control of transitioning the power state from the low power state to the minimum power state. In a case where the determination unit 113 determines that the person 500 moves from the distance region 203 to the distance region 202, and in a case where the determination unit 113 determines that the person 500 moves from the distance region 202 to the distance region 203, the power state control unit 114 does not change the power state. In these cases, the power state control unit 114 controls the power state to maintain the standby state.

Thus, in the state illustrated in Fig. 13, that is, in a state where the person 500 enters the distance region 201, the power state control unit 114 controls the image forming apparatus 3 to be in the low power state. Then, as illustrated in Fig. 13, in a case where the person 500 proceeds straight to the image forming apparatus 3 through the specific region (the divided region 5) in the direction indicated by the outline arrow and enters the distance region 203, the determination unit 113 determines that the person 500 moves from the distance region 201 to the distance region 203. Then, the power state control unit 114 controls the image forming apparatus 3 to transition from the low power state to the standby state.

Meanwhile, as indicated by the black arrow, in a case where the person 500 passes through the detectable region 200 without heading to the image forming apparatus 3, the determination unit 113 determines that the person 500 exits from the distance region 201 to the outside of the detectable region 200. In this case, the setting unit 115 performs processing of setting the distance d3 in the specific region in the order of the divided regions 6 to 12 in accordance with the movement of the person 500 and, in a case where the above cancelation condition is satisfied, cancels the setting of the distance d3.

That is, in a case where the cancelation condition is satisfied, the setting unit 115 can cancel the setting of the third distance. For example, the cancelation condition for canceling the setting of the third distance may indicate that a determination that the person 500 exits to the outside of the detectable region 200 is made, like the above cancelation condition for canceling the setting of the second distance. Alternatively, the cancelation condition may indicate that a predetermined time elapses from the setting of the third distance. Alternatively, the cancelation condition may indicate that the number of divided regions in which the third distance is set exceeds a predetermined number. In this case, the "predetermined number" is a number with which the third distance can be set at the same time.

In the example of Fig. 13, the cancelation condition indicating that a determination that the person 500 exits to the outside of the detectable region 200 is made is determined in advance. Thus, as indicated by the black arrow in Fig. 13, in a case where the person 500 exits to the outside of the detectable region 200, the setting unit 115 determines that the cancelation condition is satisfied, and cancels the setting of the distance d3, which is the third distance.

### (Setting of Fourth Distance)

In a case where the third distance is set in the specific region, the setting unit 115 illustrated in Fig. 7 can set the fourth distance in an adjacent region adjacent to the specific region. Specifically, in a case where a person is detected within the first distance, the setting unit 115 can set the third distance in which the region connecting the location where the person is detected to the image forming apparatus 3 is set as the specific region, and further set the fourth distance in the adjacent region. The fourth distance is set as a distance that is longer than the second distance and shorter than the first distance. The fourth distance is used in the power state transition processing, like the first distance, the second distance, and the third distance.

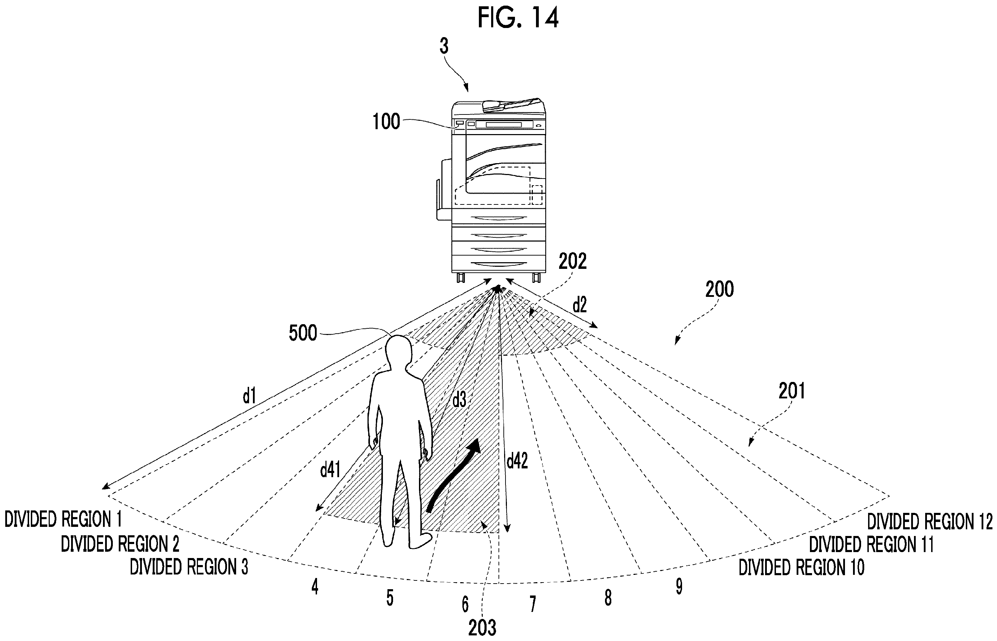

Fig. 14 illustrates a specific example in a case where the fourth distance is set in the detectable region 200. As illustrated in Fig. 14, in a case where the person 500 enters the distance region 201 of the divided region 5 of the detectable region 200, the power state control unit 114 controls the power state of the image forming apparatus 3 to transition from the minimum power state to the low power state. The setting unit 115 sets the distance d3, which is the third distance, in the divided region 5 entered by the person 500 and further sets each of distances d41 and d42 that are the fourth distance, in each of the divided regions 4 and 6 adjacent to the divided region 5.

Each of the distances d41 and d42 illustrated in Fig. 14 is a distance as a threshold value for defining the distance region 203 in each of the divided regions 4 and 6. Thus, in a case where each of the distances d41 and d42 is set in each of the divided regions 4 and 6, the distance region 203 is formed in each of the divided regions 4 and 6. The distance d41 is a distance as a threshold value for defining the distance region 203 in the divided region 4. The distance d42 is a distance as a threshold value for defining the distance region 203 in the divided region 6. Since the fourth distance (the distances d41 and d42) set in the adjacent region can be set within a range of the adjacent region, a length of the fourth distance is not necessarily uniform.

In a case where the distance region 203 is formed in the adjacent region, the determination unit 113 determines whether or not the person 500 enters the distance region 203 and determines whether or not the person 500 exits from the distance region 203, based on the detection distance of the human detection sensor 100 as the detection result. The determination as to whether or not the person 500 enters the distance region 203 and the determination as to whether or not the person 500 exits from the distance region 203 are described above.

A person who enters the specific region may not proceed straight to the image forming apparatus 3. For example, like the person 500 illustrated in Fig. 14, a person may enter the divided region 5, which is the specific region, by proceeding in the direction of the arrow and then immediately move to the divided region 6, which is the adjacent region. Even in such a case, since the distance region 203 is also formed in the divided region 6, the power state control unit 114 maintains the standby state.

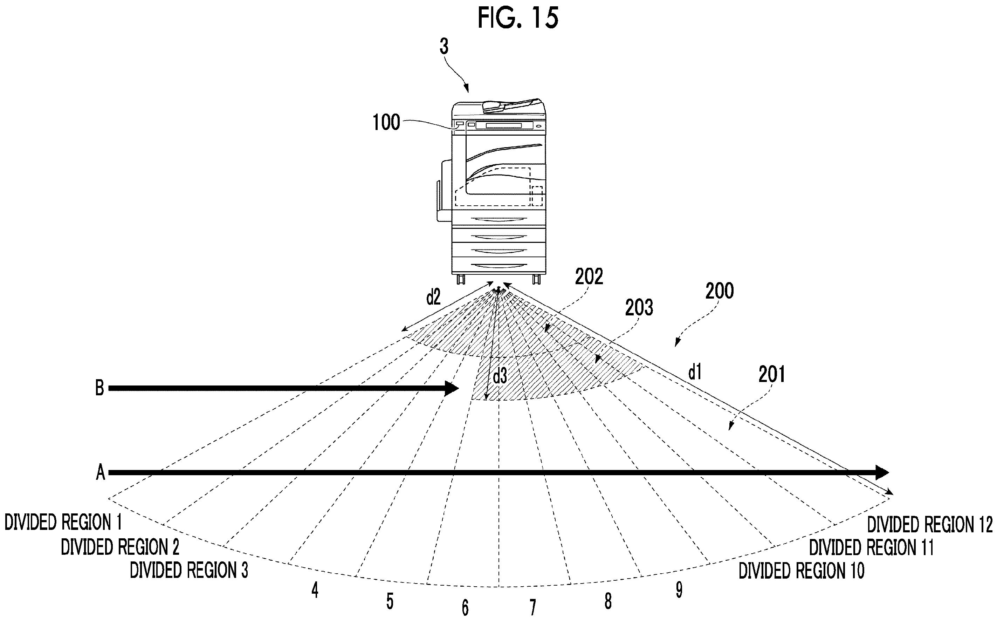

Fig. 15 is a diagram illustrating a specific example of processing of canceling the setting of the third distance and the fourth distance.

Fig. 15 illustrates an example in which two people pass through the detectable region 200 with a difference in time. In Fig. 15, a path A indicates a path of a first person who passes through the detectable region 200 earlier, with an arrow. A path B indicates a path of a second person who passes through the detectable region 200 later, with an arrow.

In a case where the first person passes through the detectable region 200 along the path A, the distance d3, which is the third distance, is set for each divided region in accordance with the movement of the first person in the detectable region 200. In the example of Fig. 15, since the path A passes through all of the divided regions 1 to 12, the distance d3 is set in all of the divided regions 1 to 12. Accordingly, the distance region 203 is formed in all of the divided regions 1 to 12.

In a case where the first person exits from the detectable region 200 after the distance region 203 is formed in all of the divided regions 1 to 12, a determination that the cancelation condition is satisfied is made, and the setting of the distance d3 is canceled. However, the second person may enter the detectable region 200 before the first person exits from the detectable region 200. In this case, since the distance region 203 is formed in at least a part of the divided regions 1 to 12 in a case where the second person enters the detectable region 200, the second person may unintentionally enter the distance region 203. In a case where the second person enters the distance region 203, the image forming apparatus 3 is restored by automatically transitioning to the standby state. In this case, the image forming apparatus 3 is unnecessarily restored, which poses a problem in terms of energy saving efficiency.

Meanwhile, the above problem can be addressed by setting the cancelation condition indicating that the predetermined time elapses from the setting of the third distance. In this case, the "predetermined time" is not particularly limited, and may be determined as, for example, a time assumed as a time for a person to walk the distance d1.

### [Flow of Power State Transition Processing]

Next, a flow of the power state transition processing in the second exemplary embodiment will be described with reference to Figs. 7 to 16.

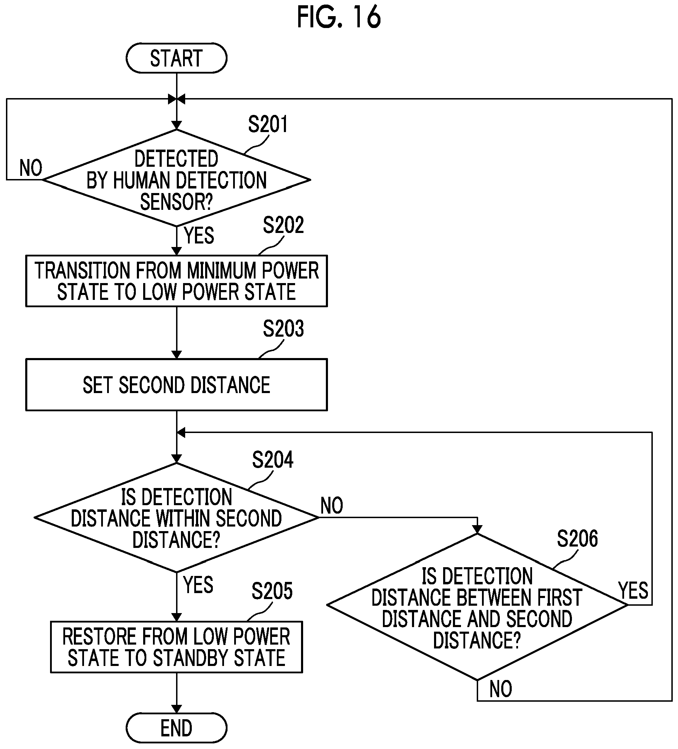

Fig. 16 is a flowchart illustrating an example of a flow of processing of detecting a person by setting the second distance during the power state transition processing performed by the image forming apparatus 3 of Fig. 7.

The image forming apparatus 3 maintains the minimum power state in a state where no one enters the detectable region 200 (see Fig. 8). In a case where the human detection sensor 100 detects a person entering the distance region 201 from the outside of the detectable region 200 (YES in step S201), the image forming apparatus 3 proceeds to the processing of step S203 by transitioning from the minimum power state to the low power state (step S202). Meanwhile, in a case where the human detection sensor 100 does not detect anyone (NO in step S201), the image forming apparatus 3 repeats the determination processing of step S201.

The image forming apparatus 3 sets the second distance (step S203). Specifically, the image forming apparatus 3 sets the distance d2, which is the second distance, obtained using the predetermined coefficient with respect to the detection distance of the person detected in step S201 (see Fig. 9). In a case where the detection distance of the person detected in step S201 is within the second distance (YES in step S204), the image forming apparatus 3 determines that the person enters the distance region 202, and is restored by transitioning from the low power state to the standby state (step S205). Accordingly, the processing is finished (END). Meanwhile, in a case where the detection distance exceeds the second distance (NO in step S204), the image forming apparatus 3 proceeds to the determination processing of step S206.

In a case where the detection distance of the person detected in step S201 is between the first distance and the second distance (YES in step S206), the image forming apparatus 3 determines that the person is staying in the distance region 201. In the above example of Fig. 9, in a case where the detection distance is between the distance d1 and the distance d2, a determination that the person 500 is staying in the distance region 201 is made. In this case, the image forming apparatus 3 returns to the determination processing of step S204.

Meanwhile, in a case where the detection distance of the person detected by the human detection sensor 100 in step S201 is not between the first distance and the second distance (NO in step S206), the image forming apparatus 3 determines that the person exits from the detectable region 200. In the above example of Fig. 9, in a case where the detection distance is not between the distance d1 and the distance d2, the image forming apparatus 3 determines that the person 500 exits from the detectable region 200. In this case, the image forming apparatus 3 returns to the determination processing of step S201.

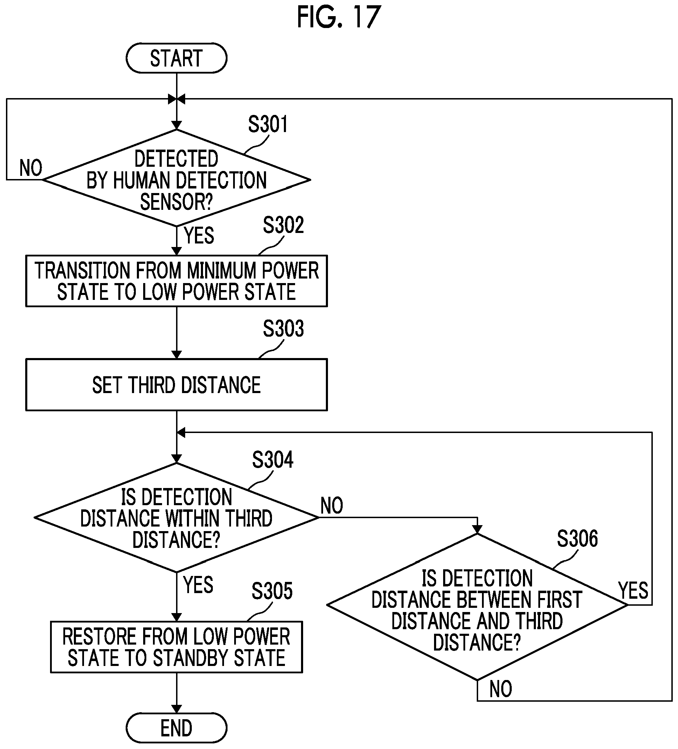

Fig. 17 is a flowchart illustrating an example of a flow of processing of detecting a person by setting the third distance during the power state transition processing performed by the image forming apparatus 3 of Fig. 7.

The image forming apparatus 3 maintains the minimum power state in a state where no one enters the detectable region 200 (see Fig. 8). However, in a case where the human detection sensor 100 detects a person entering the distance region 201 from the outside of the detectable region 200 (YES in step S301), the image forming apparatus 3 transitions from the minimum power state to the low power state (step S302). Meanwhile, in a case where the human detection sensor 100 does not detect anyone (NO in step S301), the image forming apparatus 3 repeats the determination processing of step S301.

The image forming apparatus 3 sets the third distance in which the region connecting the location where the person is detected to the image forming apparatus 3 is set as the specific region (step S303). Specifically, the image forming apparatus 3 sets the distance d3, which is the third distance (see Fig. 12). In a case where the detection distance of the person detected in step S301 is within the third distance (YES in step S304), the image forming apparatus 3 determines that the person enters the distance region 203, and is restored by transitioning from the low power state to the standby state (step S305). Accordingly, the processing is finished (END). Meanwhile, in a case where the detection distance exceeds the third distance (NO in step S304), the image forming apparatus 3 proceeds to the determination processing of step S306.

In a case where the detection distance of the person detected in step S301 is between the first distance and the third distance (YES in step S306), the image forming apparatus 3 determines that the person is staying in the distance region 201. In the above example of Fig. 12, in a case where the detection distance is between the distance d1 and the distance d3, a determination that the person 500 is staying in the distance region 201 is made. In this case, the image forming apparatus 3 returns to the determination processing of step S304.

Meanwhile, in a case where the detection distance of the person detected by the human detection sensor 100 in step S301 is not between the first distance and the third distance (NO in step S306), the image forming apparatus 3 determines that the person exits from the detectable region 200. In the above example of Fig. 12, in a case where the detection distance is not between the distance d1 and the distance d3, the image forming apparatus 3 determines that the person 500 exits from the detectable region 200. In this case, the image forming apparatus 3 returns to the determination processing of step S301.

### <Other Exemplary Embodiments>

While the present exemplary embodiment is described above, the present invention is not limited to the first exemplary embodiment and the second exemplary embodiment described above. Effects of the present invention are not limited to the effects according to the above exemplary embodiments. For example, the overall configuration of the image forming system 1 illustrated in Fig. 1, the hardware configuration of the image forming apparatus 2 illustrated in Fig. 2, and the functional configuration of each of the image forming apparatuses 2 and 3 illustrated in Figs. 5 and 7 are merely examples for achieving the object of the present invention and are not particularly limited. That is, as long as the image forming system 1 of Fig. 1 has a function with which the above processing can be executed as a whole, what kind of hardware configuration and what kind of functional configuration are to be used to implement the function are not limited to the above example.

The order of steps of the processing of the image forming apparatus 2 or 3 illustrated in the flowcharts of Figs. 6, 16, and 17 is merely an example and is not particularly limited. Not only processing performed in time series along the illustrated order of steps but also processing not necessarily performed in time series may be performed in parallel or individually. The specific examples illustrated in Figs. 3 and 8 to 15 are merely examples and are not particularly limited.

For example, while the above exemplary embodiments adopt the configuration of incorporating the human detection sensor 100 in the image forming apparatuses 2 and 3, a configuration of installing the human detection sensor 100 separately from the image forming apparatuses 2 and 3 can also be adopted. For example, a configuration of installing the human detection sensor 100 around the apparatus, on a ceiling of a room, or the like can also be adopted. **In** addition, a configuration of outputting the signal from the human detection sensor 100 within a range of 360° can be adopted. Accordingly, the apparatus can be efficiently restored even in a case where a person approaches from any direction.

While the above exemplary embodiments describe the image forming apparatuses 2 and 3 as an example of a target apparatus for changing the power state stepwise, the present invention is not limited to the exemplary embodiments. For example, the present invention can be applied to various apparatuses such as an illumination apparatus, an air conditioning apparatus, signage, and a robot, as an apparatus in which a plurality of power states of the apparatus can be set. **In** addition, various modifications and alternative configurations not departing from the technical scope of the present invention fall within the present invention.

### (Supplementary Note)

(((1))) An image forming system comprising:
   a processor configured to:
   restore, in a case where a person is detected within a first distance from an image forming apparatus by a human detection sensor that detects a person, the image forming apparatus in a first power state to a second power state that is a higher power state than the first power state; and
   restore, in a case where a person is detected by the human detection sensor within a second distance that is a distance from the image forming apparatus shorter than the first distance, the image forming apparatus to a third power state that is a higher power state than the second power state.
(((2))) The image forming system according to (((1))), wherein the processor is configured to:
   in a case where a person is detected within the first distance the human detection sensor, for a specific region that is a region connecting a location where the person is detected in a detection region that is a region in which the human detection sensor detects a person, to the image forming apparatus, restore the image forming apparatus to the third power state in a case where the person is detected within a third distance that is a distance from the image forming apparatus longer than the second distance.
(((3))) The image forming system according to (((2))),
   wherein the third distance is shorter than the first distance.
(((4))) The image forming system according to (((2))) or (((3))), wherein the processor is configured to:
   for an adjacent region adjacent to the specific region, restore the image forming apparatus to the third power state in a case where the person is detected within a fourth distance that is a distance from the image forming apparatus longer than the second distance.
(((5))) The image forming system according to (((4))),
   wherein the fourth distance is shorter than the third distance.
(((6))) The image forming system according to any one of (((2))) to (((5))), wherein the processor is configured to:
   stop restoring the image forming apparatus to the third power state in a case where the person is detected within the third distance, based on a predetermined condition.
(((7))) The image forming system according to any one of (((1))) to (((6))), wherein the processor is configured to:
   in a case where a person is detected within the first distance by the human detection sensor, set the second distance using a predetermined coefficient with respect to a distance from the image forming apparatus to a location where the person is detected.
(((8))) The image forming system according to any one of (((1))) to (((7))), wherein the processor is configured to:
   divide a detection region that is a region in which the human detection sensor detects a person, into a plurality of regions in a radial shape centered at the image forming apparatus; and
   in a case where a person is detected within the first distance by the human detection sensor in any of the divided regions, for a divided region including a location where the person is detected, restore the image forming apparatus to the third power state in a case where the person is detected within a third distance that is a distance from the image forming apparatus longer than the second distance.
(((9))) The image forming system according to (((8))), wherein the processor is configured to:
   for an adjacent divided region adjacent to the divided region including the location where the person is detected, restore the image forming apparatus to the third power state in a case where the person is detected within a fourth distance that is a distance from the image forming apparatus longer than the second distance.
(((10))) The image forming system according to (((9))),
   wherein the fourth distance is shorter than the third distance.
(((11))) The image forming system according to (((8))), wherein the processor is configured to:
   stop restoring the image forming apparatus to the third power state in a case where the person is detected within the third distance in the divided region, based on a predetermined condition.
(((12))) The image forming system according to (((11))),
   wherein the predetermined condition indicates that the number of divided regions with which the image forming apparatus is restored to the third power state in a case where the person is detected within the third distance exceeds a predetermined number.
(((13))) The image forming system according to any one of (((1))) to (((12))), wherein the processor is configured to:
   divide a region in which the human detection sensor detects a person, into a plurality of regions in a radial shape centered at the image forming apparatus; and
   in a case where a person is detected within the first distance in any of the divided regions, set the second distance in the divided region using a predetermined coefficient with respect to a distance from the image forming apparatus to a location where the person is detected.
(((14))) The image forming system according to (((13))), wherein the processor is configured to:
   cancel the second distance set in the divided region based on a predetermined condition.

According to the image forming system according to (((1))), energy saving efficiency can be improved while securing convenience of use for a person expected to use the apparatus.

According to the image forming system according to (((2))), approaching of the person expected to use the apparatus can be detected at an earlier timing than in a configuration in which, in a case where a person is detected in a first region, the person is detected in the second distance in the specific region connecting the location where the person is detected to the image forming apparatus.

According to the image forming system according to (((3))), approaching of the person expected to use the apparatus can be detected at an earlier timing than in a configuration in which, in a case where a person is detected in a first region, the person is detected in the second distance in the specific region connecting the location where the person is detected to the image forming apparatus.

According to the image forming system according to (((4))), a motion of the person expected to use the apparatus can be handled more flexibly than in a configuration in which, in a case where a person is detected in a first region, the person is not detected in the second distance in the adjacent region adjacent to the specific region.

According to the image forming system according to (((5))), a motion of the person expected to use the apparatus can be handled more flexibly than in a configuration in which, in a case where a person is detected in a first region, the person is not detected in the second distance in the adjacent region adjacent to the specific region.

According to the image forming system according to (((6))), energy saving efficiency can be improved compared to the case of unconditionally continuing a state where the third power state is restored in a case where the person is detected within the third distance.

According to the image forming system according to (((7))), the second distance can be set in accordance with an aspect of use of a user compared to the case of not determining the coefficient for calculating the second distance.

According to the image forming system according to (((8))), since the setting of the second distance and the setting of the third distance can be performed for each divided region, detailed setting corresponding to the aspect of use of the user can be performed.

According to the image forming system according to (((9))), a motion of the person expected to use the apparatus can be handled more flexibly than in a configuration in which, in a case where a person is detected in a first region, the person is not detected in the second distance in the adjacent region adjacent to the divided region that is the specific region.

According to the image forming system according to (((10))), a motion of the person expected to use the apparatus can be handled more flexibly than in a configuration in which, in a case where a person is detected in a first region, the person is not detected in the second distance in the adjacent region adjacent to the divided region that is the specific region.

According to the image forming system according to (((11))), energy saving efficiency can be improved compared to the case of unconditionally continuing a state where the third power state is restored in a case where the person is detected within the third distance.

According to the image forming system according to (((12))), energy saving efficiency can be improved compared to the case of unconditionally continuing a state where the third power state is restored in a case where the person is detected within the third distance.

According to the image forming system according to (((13))), the second distance can be set in accordance with the aspect of use of the user compared to the case of not determining the coefficient for calculating the second distance.

According to the image forming system according to (((14))), energy saving efficiency can be improved compared to the case of unconditionally continuing a state where the third power state is restored in a case where the person is detected within the third distance.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: image forming system
2: image forming apparatus
10: control unit
11: CPU
20: storage unit
30: operation unit
40: display unit
50: image reading unit
60: image forming unit
70: communication unit
100: human detection sensor
111: acquisition unit
112: management unit
113: determination unit
114: power state control unit
115: setting unit
200: detectable region
201, 202, 203: distance region

## Claims

1. An image forming system comprising:
a processor configured to:
restore, in a case where a person is detected within a first distance from an image forming apparatus by a human detection sensor that detects a person, the image forming apparatus in a first power state to a second power state that is a higher power state than the first power state; and
restore, in a case where a person is detected by the human detection sensor within a second distance that is a distance from the image forming apparatus shorter than the first distance, the image forming apparatus to a third power state that is a higher power state than the second power state.

2. The image forming system according to claim 1, wherein the processor is configured to:
in a case where a person is detected within the first distance the human detection sensor, for a specific region that is a region connecting a location where the person is detected in a detection region that is a region in which the human detection sensor detects a person, to the image forming apparatus, restore the image forming apparatus to the third power state in a case where the person is detected within a third distance that is a distance from the image forming apparatus longer than the second distance.

3. The image forming system according to claim 2,
wherein the third distance is shorter than the first distance.

4. The image forming system according to claim 2 or 3, wherein the processor is configured to:
for an adjacent region adjacent to the specific region, restore the image forming apparatus to the third power state in a case where the person is detected within a fourth distance that is a distance from the image forming apparatus longer than the second distance.

5. The image forming system according to claim 4,
wherein the fourth distance is shorter than the third distance.

6. The image forming system according to any one of claims 2 to 5, wherein the processor is configured to:
stop restoring the image forming apparatus to the third power state in a case where the person is detected within the third distance, based on a predetermined condition.

7. The image forming system according to any one of claims 1 to 6, wherein the processor is configured to:
in a case where a person is detected within the first distance by the human detection sensor, set the second distance using a predetermined coefficient with respect to a distance from the image forming apparatus to a location where the person is detected.

8. The image forming system according to any one of claims 1 to 7, wherein the processor is configured to:
divide a detection region that is a region in which the human detection sensor detects a person, into a plurality of regions in a radial shape centered at the image forming apparatus; and
in a case where a person is detected within the first distance by the human detection sensor in any of the divided regions, for a divided region including a location where the person is detected, restore the image forming apparatus to the third power state in a case where the person is detected within a third distance that is a distance from the image forming apparatus longer than the second distance.

9. The image forming system according to claim 8, wherein the processor is configured to:
for an adjacent divided region adjacent to the divided region including the location where the person is detected, restore the image forming apparatus to the third power state in a case where the person is detected within a fourth distance that is a distance from the image forming apparatus longer than the second distance.

10. The image forming system according to claim 9,
wherein the fourth distance is shorter than the third distance.

11. The image forming system according to claim 8, wherein the processor is configured to:
stop restoring the image forming apparatus to the third power state in a case where the person is detected within the third distance in the divided region, based on a predetermined condition.

12. The image forming system according to claim 11,
wherein the predetermined condition indicates that the number of divided regions with which the image forming apparatus is restored to the third power state in a case where the person is detected within the third distance exceeds a predetermined number.

13. The image forming system according to any one of claims 1 to 12, wherein the processor is configured to:
divide a region in which the human detection sensor detects a person, into a plurality of regions in a radial shape centered at the image forming apparatus; and
in a case where a person is detected within the first distance in any of the divided regions, set the second distance in the divided region using a predetermined coefficient with respect to a distance from the image forming apparatus to a location where the person is detected.

14. The image forming system according to claim 13, wherein the processor is configured to:
cancel the second distance set in the divided region based on a predetermined condition.
